# EUROPEAN PATENT APPLICATION

(11) **EP 4 253 480 A1**
(43) Date of publication of application: **04.10.2023**
(21) Application number: 21908594.1
(22) Date of filing: 30.07.2021
(51) Int. Cl.: C08L 79/08, C08L 79/04, C08K 7/14, C08K 7/18, C08K 3/013, B32B 17/02, B32B 17/12, B32B 17/06, B32B 15/20

(54) **MODIFIED BISMALEIMIDE PREPOLYMER, PREPARATION METHOD THEREFOR, AND APPLICATION THEREOF**

(30) Priority: 22.12.2020 CN 202011526745
(71) Applicant: Guangdong Hinno-Tech Co., Ltd., Guangzhou, Guangdong 510000 (CN); Research Institute of Tsinghua, Pearl River Delta, Guangzhou, Guangdong 510530 (CN)
(72) Inventor: GUO, Yongjun, Guangzhou, Guangdong 510000 (CN); WEN, Wenyan, Guangzhou, Guangdong 510000 (CN); FUSE, Kemmei, Guangzhou, Guangdong 510000 (CN); CHEN, Jianxiong, Guangzhou, Guangdong 510000 (CN)
(74) Representative: Murgitroyd & Company
(86) International application number: PCT/CN2021/109661
(87) International publication number: WO 2022/134589

(57) **Abstract**

The present disclosure relates to a modified bismaleimide prepolymer, a preparation method thereof, and use thereof. In the present disclosure, a bismaleimide resin is modified with a suitable type of allyl compound to obtain a modified bismaleimide prepolymer. A laminate prepared using the prepolymer as a raw material has high peel strength. Moreover, it is further found that the modified bismaleimide prepolymer has good compatibility with other resins, can dissolve in common solvents, and is prone to cure. Furthermore, the laminate prepared using the modified bismaleimide prepolymer as a raw material has excellent heat resistance and toughness.

## Description

### TECHNICAL FIELD

The present disclosure relates to the technical field of modified resin material, and particularly to a modified bismaleimide prepolymer, a preparation method and use thereof.

### BACKGROUND

With the rapid development of electronic circuit boards, the requirements of printed circuit boards for high density and high integration of wiring density are increasingly stringent. Therefore, it has been challenging for conventional epoxy resins to meet the high-performance requirements of laminates.

In recent years, some resin substrates with high performances, such as benzoxazine, bismaleimide, etc., have been emerged. Among them, bismaleimide has excellent heat resistance and stability, and has relatively good price-performance ratio and processability, making it a popular new resin substrate in high-performance copper-clad laminates.

However, the unmodified bismaleimide has disadvantages such as poor solubility, high curing temperature, and high brittleness of the cured products due to its highly symmetrical structure, and thus it is difficult to use the unmodified bismaleimide alone. For example, a halogen-free flame retardant compound includes a bismaleimide resin, a benzoxazine resin, a polyepoxide, a phosphorus-containing flame retardant, a curing agent, etc. Due to the addition of bismaleimide alone, the curing temperature of the material is increased, and thus the curing difficulty of the material is increased. Moreover, the unmodified bismaleimide resin has poor compatibility with a resin such as an epoxy resin. Therefore, bismaleimide needs to be modified before use.

Conventional bismaleimide modification methods are as follows: A method for preparing a high-toughness bismaleimide resin material includes the following specific steps of: (1) dissolving p-toluidine and triethylamine in acetonitrile to obtain a mixed solution, dispersing inorganic whiskers and sodium hexametaphosphate in ethanol to obtain a whisker dispersion, adding the whisker dispersion to the mixed solution at a stirring speed of 80 r/min to 100 r/min, followed by heating to 60 °C to 70 °C and stirring for 1 hour to 1.5 hours, slowly adding allyl bromide, continuously stirring for reaction for 3 hours to 4 hours, stopping heating and stirring, cooling down to room temperature, followed by adjusting the pH value to 5 to 6 with a 10% w/w hydrochloric acid solution, then concentrating under reduced pressure, washing with water for 3 to 5 times, concentrating under reduced pressure, and drying under vacuum to obtain N,N-diallyl-p-toluidine-coated inorganic whiskers; (2) adding the N,N-diallyl-p-toluidine-coated inorganic whiskers and 4,4'-bismaleimide diphenylmethane to acetone, dispersing at a stirring speed of 120 r/min to 150 r/min, and heating and pressurizing for reaction, thereby obtaining a prepolymer, i.e., an inorganic whisker/prepolymer mixture; (3) adding 4,4'-bismaleimide diphenylmethane into the inorganic whisker/prepolymer mixture, heating to 155 °C to 160 °C, stirring and mixing for 20 min to 30 min, pouring the mixture into a preheated mold coated with a mold release agent, defoaming under vacuum, heating for curing, and finally cooling down to room temperature, to obtain the high-toughness bismaleimide resin material. As another example, a thermal repairing bismaleimide resin composition includes 60 to 100 parts by mass of a polysiloxane-modified tetraallyl compound, 100 parts by mass of a bismaleimide monomer, and 1 to 5 parts by mass of an alkaline catalyst. As yet another example, a method for preparing a soluble bismaleimide resin modified with a difunctional alkenyl phenoxy compound is carried out by the following steps of: (i) weighing 100 parts by weight of bismaleimide, 50 to 120 parts by weight of difunctional alkenyl phenoxy compound, and 3 to 20 parts by weight of an inorganic filler; (ii) mixing the 100 parts by weight of bismaleimide and the 50 to 20 parts by weight of difunctional alkenyl phenoxy compound, heating the reaction system to a temperature of 110 °C to 145 °C while stirring, and then holding the temperature at 110 °C to 145 °C for 5 min to 30 min, to obtain a bismaleimide prepolymer; (iii) adding the 3 to 20 parts by weight of the inorganic filler into the bismaleimide prepolymer, and then reacting at a temperature of 70 °C to 100 °C while stirring for 10 min to 30 min, and cooling down to room temperature at the end of the reaction, to obtain the soluble bismaleimide resin modified with the difunctional alkenyl phenoxy compound. The raw materials of the difunctional alkenyl phenoxy compound includes p-difluorobenzene and 2-alkenylphenol, which is 2-allylphenol or 2-propenylphenol. However, the peal strength of the laminate board prepared using the above-described modified bismaleimide material is relatively low.

### SUMMARY

In view of the above, a purpose of the present disclosure is to provide a modified bismaleimide prepolymer, a preparation method thereof, and use thereof. In the present disclosure, a bismaleimide resin is modified with a suitable type of allyl compound to obtain a modified bismaleimide prepolymer. A laminate with high peel strength is prepared by using the prepolymer as a raw material.

The technical solutions are as follows.

A modified bismaleimide prepolymer is prepared from raw materials including a bismaleimide resin and a modifier.

The modifier is a 4,4'-bis(allyl-benzoic acid) biphenyl ester-based allyl compound, or a combination of the 4,4'-bis(allyl-benzoic acid) biphenyl ester-based allyl compound and another type of bismaleimide resin modifier.

In an embodiment, 100 parts by mass of the bismaleimide resin corresponds to 50 to 100 parts by mass of the 4,4'-bis(allyl-benzoic acid) biphenyl ester-based allyl compound.

In an embodiment, the 4,4'-bis(allyl-benzoic acid) biphenyl ester-based allyl compound is selected from the group consisting of 4,4'-bis(4-allyl-benzoic acid) biphenyl ester, 3,3',5,5'-tetramethyl-4,4'-bis(4-allyl-benzoic acid) biphenyl ester, 2,2',6,6'-tetra-tert butyl-4,4'-bis(4-allyl-benzoic acid) biphenyl ester, 3,3',5,5'-tetra-tert-butyl-2,2'-bis(4-allyl-benzoic acid) biphenyl ester, 3,3',5,5'-tetramethoxyl-4,4'-bis(4-allyl-benzoic acid) biphenyl ester, 3,3',5,5'-tetrachloro-4,4'-bis(4-allyl-benzoic acid) biphenyl ester, 2,2',3,3',5,5'-hexamethyl-4,4'-bis(4-allyl-benzoic acid)biphenyl ester, and any combinations thereof.

In an embodiment, the bismaleimide resin is an organic compound containing two or more maleimide groups in its molecular structure.

In an embodiment, the bismaleimide resin is selected from the group consisting of N,N'-(4,4'-methylenediphenyl) bismaleimide, N-phenyl maleimide, N-(2-methylphenyl) maleimide, N-(4-methylphenyl) maleimide, N-(2,6-dimethylphenyl) maleimide, bis(4-maleimidophenyl) methane, 2,2-bis(4-(4-maleimidophenoxy)-phenyl) propane, bis(3,5-dimethyl-4-maleimidophenyl) methane, bis(3-ethyl-5-methyl-4-maleimidophenyl)methane, bis(3,5-diethyl-4-maleimidophenyl) methane, polyphenylmethane bismaleimide, biphenyl structure containing maleimide, and any combinations thereof.

In an embodiment, the other type of bismaleimide resin modifier is selected from the group consisting of diallyl bisphenol A, diallyl bisphenol S, diallyl bisphenol F, bisphenol A diallyl ether, and any combinations thereof.

A method for preparing the modified bismaleimide prepolymer as described above is provided. The method includes the following step of:
adding the bismaleimide resin into a melted 4,4'-bis(allyl-benzoic acid) biphenyl ester-based allyl compound to react for prepolymerization.

In an embodiment, the reaction temperature is 120 °C to 180 °C, and the reaction time is 30 min to 120 min.

A resin composition is provided. The resin composition includes a modified bismaleimide prepolymer, a cyanate ester resin, an inorganic filler, and a curing accelerator. The modified bismaleimide prepolymer is the modified bismaleimide prepolymer as described above.

In an embodiment, the resin composition includes:
10 to 100 parts by mass of the modified bismaleimide prepolymer,
10 to 90 parts by mass of the cyanate ester resin,
0 to 50 parts by mass of the inorganic filler, and
5 to 10 parts by mass of the curing accelerator.

In an embodiment, the resin composition includes:
20 to 80 parts by mass of the modified bismaleimide prepolymer,
10 to 90 parts by mass of the cyanate ester resin,
0 to 50 parts by mass of the inorganic filler, and
5 to 10 parts by mass of the curing accelerator.

In an embodiment, the resin composition includes:
10 to 100 parts by mass of the modified bismaleimide prepolymer,
10 to 60 parts by mass of the cyanate ester resin,
0 to 50 parts by mass of the inorganic filler, and
5 to 10 parts by mass of the curing accelerator.

In an embodiment, the cyanate ester resin is selected from the group consisting of a bisphenol A cyanate ester resin, a phenolic formaldehyde cyanate ester resin, a bisphenol F cyanate ester resin, a multifunctional group cyanate ester resin, a bisphenol M cyanate ester resin, a bisphenol E cyanate ester resin, a dicyclopentadiene bisphenol cyanate ester resin, and any combinations thereof.

In an embodiment, the inorganic filler is selected from the group consisting of zirconium vanadate, zirconium tungstate, hafnium tungstate, microcrystalline glass, eucryptite, silicon dioxide, quartz, mica powder, titanium dioxide, magnesium oxide, magnesium hydroxide, talc powder, aluminum oxide, silicon carbide, boron nitride, aluminum nitride, molybdenum oxide, barium sulfate, zinc molybdate, zinc borate, zinc stannate, zinc oxide, strontium titanate, barium titanate, calcium titanate, clay, kaolin, and any combinations thereof.

In an embodiment, the curing accelerator is selected from the group consisting of a tertiary amine accelerator, an imidazole accelerator, a peroxide accelerator, an organophosphorus accelerator, a transition metal carboxylate accelerator, and any combinations thereof.

In an embodiment, the resin composition further includes another type of resin, and the other type of resin is selected from the group consisting of an epoxy resin, a benzoxazine resin, polyphenyl ether, a hydrocarbon resin, and any combinations thereof.

A method for preparing the resin composition as described above includes the following step of: mixing the modified bismaleimide prepolymer, the cyanate ester resin, the inorganic filler, the curing accelerator, and a solvent together.

In an embodiment, the solvent is selected from the group consisting of ethanol, acetone, cyclohexanone, butanone, toluene, xylene, N,N-dimethylformamide, propylene glycol methyl ether, and any combinations thereof; or/and the solvent takes 10 to 50 parts by mass.

A prepreg includes a reinforcement material and a resin material, and the resin material is prepared from raw materials including the modified bismaleimide prepolymer as described above, or the resin material is the resin composition as described above.

In an embodiment, the reinforcement material is an inorganic fiber material or/and an organic fiber material.

In an embodiment, the inorganic fiber material is selected from the group consisting of glass fibers, carbon fibers, silicon carbide fibers, asbestos fibers, and any combinations thereof; or/and the organic fiber material is selected from the group consisting of nylon, ultra-high molecular mass polyethylene fibers, aramid fibers, polyimide fibers, polyester fibers, cotton fibers, and any combinations thereof.

A method for preparing the prepreg as described above, includes the following step of:
immersing the reinforcement material in the resin material, and heating.

In an embodiment, the heating is at 130 °C to 250 °C, and is kept for 2 min to 10 min.

A laminate includes a prepreg, and the prepreg is prepared from raw materials including the modified bismaleimide prepolymer as described above, or the resin composition as described above, or the prepreg is the prepreg as described above.

In an embodiment, the laminate is clad with metal foil at one side or both sides of the laminate.

In an embodiment, the metal foil is copper foil; or/and the thickness of the metal foil is 3 µm to 70 µm.

A method for preparing the laminate as described above, includes the following step of: hot pressing the prepreg under vacuum.

In an embodiment, the conditions for hot pressing under vacuum includes: a temperature of 150 °C to 300 °C, a pressure of 10 kgf/cm² to 30 kgf/cm², a vacuum degree of < 2 kPa, and hot pressing time of 200 min to 400 min.

The present disclosure has the following beneficial effects over prior art.

In the present disclosure, a bismaleimide resin is modified with a suitable type of allyl compound to obtain a modified bismaleimide prepolymer. A laminate prepared using the prepolymer as a raw material has high peel strength. Moreover, it is further found that the modified bismaleimide prepolymer has good compatibility with other resins such as a cyanate ester resin, can dissolve in common solvents, and is prone to cure. Furthermore, the laminate prepared using the modified bismaleimide prepolymer as a raw material has excellent heat resistance and toughness.

### DETAILED DESCRIPTION

For ease understanding of the present disclosure, the present disclosure will now be described thoroughly. However, the present disclosure can be implemented in many different modes and is not limited to the embodiments described herein. In contrast, these embodiments are provided for the purpose of thorough and comprehensive understanding of the present disclosure.

Unless indicated otherwise, all technical and scientific terms used herein have the same meaning as commonly understood by those skilled in the art to which the present disclosure belongs. The terms used in the description of the present disclosure is merely for the purpose of describing specific embodiments and is not intended to limit the present disclosure. As used herein, the term "and/or" includes any and all combinations of one or more of the relevant listed items.

In embodiments of the present disclosure, a modified bismaleimide prepolymer is provided. The raw materials for preparing the modified bismaleimide prepolymer include a bismaleimide resin and a modifier.

The modifier is a 4,4'-bis(allyl-benzoic acid) biphenyl ester-based allyl compound, or a combination of the 4,4'-bis(allyl-benzoic acid) biphenyl ester-based allyl compound and another type of bismaleimide resin modifier.

As described above, in the embodiments of the present disclosure, the 4,4'-bis(allyl-benzoic acid) biphenyl ester-based allyl compound can be used alone, or in combination with another type of bismaleimide resin modifier, without limitation to the proportion.

Preferably, every 100 parts by mass of the bismaleimide resin corresponds to 50 to 100 parts by mass of the 4,4'-bis(allyl-benzoic acid) biphenyl ester-based allyl compound.

Preferably, the 4,4'-bis(allyl-benzoic acid) biphenyl ester-based allyl compound is selected from the group consisting of 4,4'-bis(4-allyl-benzoic acid) biphenyl ester, 3,3',5,5'-tetramethyl-4,4'-bis(4-allyl-benzoic acid) biphenyl ester, 2,2',6,6'-tetra-tert-butyl-4,4'-bis (4-allyl-benzoic acid) biphenyl ester, 3,3',5,5'-tetra-tert-butyl-2,2'-bis(4-allyl-benzoic acid) biphenyl ester, 3,3',5,5'-tetramethoxyl-4,4'-bis(4-allyl-benzoic acid) biphenyl ester, 3,3',5,5'-tetrachloro-4,4'-bis(4-allyl-benzoic acid) biphenyl ester, 2,2',3,3',5,5'-hexamethyl-4,4'-bis(4-allyl-benzoic acid) biphenyl ester, and any combinations thereof.

It should be noted that, in the embodiments of the present disclosure, the bismaleimide resin is not specific limited, which can be an organic compound containing two or more maleimide groups in its molecular structure, or can be one or more selected from the group consisting of N,N'-(4,4'-methylene-diphenyl)bismaleimide, N-phenyl maleimide, N-(2-methylphenyl)maleimide, N-(4-methylphenyl)maleimide, N-(2,6-dimethylphenyl)maleimide, bis(4-maleimidophenyl) methane, 2,2-bis(4-(4-maleimidophenoxy)-phenyl)propane, bis-(3,5-dimethyl-4-maleimidophenyl) methane, bis-(3-ethyl-5-methyl-4-maleimidophenyl)methane, bis-(3,5-diethyl-4-maleimidophenyl) methane, polyphenyl-methane bismaleimide, biphenyl structure containing maleimide, etc.

Preferably, the other type of bismaleimide resin modifier is selected from the group consisting of diallyl bisphenol A, diallyl bisphenol S, diallyl bisphenol F, bisphenol A diallyl ether, and any combinations thereof.

In embodiments of the present disclosure, a method for preparing the modified bismaleimide prepolymer as described above is provided. The method includes the following step of:
adding the bismaleimide resin into a melted 4,4'-bis(allyl-benzoic acid) biphenyl ester-based allyl compound to react for prepolymerization.

Preferably, the reaction temperature is 120 °C to 180 °C, and the reaction time is 30 min to 120 min.

In embodiments of the present disclosure, a resin composition is provided. The raw materials of the resin composition include a modified bismaleimide prepolymer, a cyanate ester resin, an inorganic filler, and a curing accelerator. The modified bismaleimide prepolymer is the modified bismaleimide prepolymer as described above.

Preferably, the resin composition includes:
10 to 100 parts by mass of the modified bismaleimide prepolymer,
10 to 90 parts by mass of the cyanate ester resin,
0 to 50 parts by mass of the inorganic filler, and
5 to 10 parts by mass of the curing accelerator.

Preferably, the resin composition includes:
20 to 80 parts by mass of the modified bismaleimide prepolymer,
10 to 90 parts by mass of the cyanate ester resin,
0 to 50 parts by mass of the inorganic filler, and
5 to 10 parts by mass of the curing accelerator.

Preferably, the resin composition includes:
10 to 100 parts by mass of the modified bismaleimide prepolymer,
10 to 60 parts by mass of the cyanate ester resin,
0 to 50 parts by mass of the inorganic filler, and
5 to 10 parts by mass of the curing accelerator.

Preferably, the cyanate ester resin is selected from the group consisting of a bisphenol A cyanate ester resin, a phenolic formaldehyde cyanate ester resin, a bisphenol F cyanate ester resin, a multifunctional group cyanate ester resin, a bisphenol M cyanate ester resin, a bisphenol E cyanate ester resin, a dicyclopentadiene bisphenol cyanate ester resin, and any combinations thereof.

It should be noted that, in the embodiments of the present disclosure, the types of the inorganic filler is not specific limited, which can be one or more selected from zirconium vanadate, zirconium tungstate, hafnium tungstate, microcrystalline glass, eucryptite, silicon dioxide (spherical, composite type and molten type), quartz, mica powder, titanium dioxide, magnesium oxide, magnesium hydroxide, talc powder, aluminum oxide, silicon carbide, boron nitride, aluminum nitride, molybdenum oxide, barium sulfate, zinc molybdate, zinc borate, zinc stannate, zinc oxide, strontium titanate, barium titanate, calcium titanate, clay, kaolin, etc.

Preferably, the curing accelerator is selected from the group consisting of a tertiary amine accelerator, an imidazole accelerator, a peroxide accelerator, an organophosphorus accelerator, a transition metal carboxylate accelerator, and any combinations thereof. In the embodiments of the present disclosure, the tertiary amine accelerator can be, for example, tris(dimethylaminomethyl)phenol, triethylenediamine, dimethylaniline, etc.; the imidazole curing accelerator can be, for example, 2-methylimidazole, 2-ethylimidazole, 2-ethyl-4-methylimidazole, etc.; the peroxide accelerator can be, for example, dicumyl peroxide, t-butyl peroxybenzoate, t-butyl peroxyoctanoate, etc.; the organophosphorus accelerator can be, for example, triphenylphosphine, etc.; and the transition metal carboxylate accelerator can be, for example, cobalt acetylacetone, nickel acetylacetone, zinc acetylacetone, etc.

Preferably, the resin composition further includes another type of resin, and the other type of resin is selected from the group consisting of an epoxy resin, a benzoxazine resin, polyphenyl ether, a hydrocarbon resin, and any combinations thereof.

In embodiments of the present disclosure, a method for preparing the resin composition as described above is provided. The method includes the following step of: mixing the modified bismaleimide prepolymer, the cyanate ester resin, the inorganic filler, the curing accelerator, and a solvent together.

Preferably, the solvent is selected from the group consisting of ethanol, acetone, cyclohexanone, butanone, toluene, xylene, N,N-dimethylformamide, propylene glycol methyl ether, and any combinations thereof; or/and the solvent takes 10 to 50 parts by mass.

In embodiments of the present disclosure, a prepreg is provided. The prepreg includes a reinforcement material and a resin material, and the raw materials of the resin material includes the modified bismaleimide prepolymer as described above, or the resin material can be the resin composition as described above.

In embodiments of the present disclosure, the reinforcement material can be an inorganic fiber material, or can be an organic fiber material. The inorganic fiber material can include but is not limited to glass fibers, including different types such as E, NE, D, S T -types of glass fibers, carbon fibers, silicon carbide fibers, asbestos fibers, etc. The organic fiber material can include but is not limited to nylon, ultra-high molecular mass polyethylene fibers, aramid fibers, polyimide fibers, polyester fibers, cotton fibers, etc.

In embodiments of the present disclosure, a method for preparing the prepreg as described above is provided. The method includes the following step of:
immersing the reinforcement material in the resin material, and heating.

Preferably, the heating is at 130 °C to 250 °C, and is kept for 2 min to 10 min.

In embodiments of the present disclosure, a laminate is provided. The laminate includes a prepreg, and the raw materials of the prepreg includes the modified bismaleimide prepolymer as described above, or the resin composition as described above, or the prepreg can be the prepreg as described above.

The laminate can be prepared by using a suitable number of prepregs, such as six prepregs.

Preferably, the laminate is clad with metal foil at one side or both sides of the laminate.

Preferably, the metal foil is copper foil; or/and the thickness of the metal foil is 3 µm to 70 µm.

In embodiments of the present disclosure, a method for preparing the laminate as described above is provided. The method includes the following step of: hot pressing the prepreg under vacuum.

Preferably, the conditions for hot pressing under vacuum includes: a temperature of 150 °C to 300 °C, a pressure of 10 kgf/cm² to 30 kgf/cm², a vacuum degree of < 2 kPa, and hot pressing time of 200 min to 400 min.

It can be understood that, in the metal foil cladding, the metal foil is first placed on one side or both sides of the prepreg and then laminated.

Compared with a conventional FR4 laminate, the laminate prepared in the embodiments of the present disclosure has a great improvement in heat resistance, and can be applied to printed circuit boards and other high-end materials with high performances such as high density, interconnection, integrated circuit packaging, etc.

It can be understood that, in the embodiments of the present disclosure, the 4,4'-bis(allyl-benzoic acid) biphenyl ester-based allyl compound can be commercially available, or can be self-synthesized, and the synthetic route includes but is not limited to that in the following synthesis example.

A 4,4'-bis(allyl-benzoic acid) biphenyl ester-based allyl compound with the following structure is prepared.

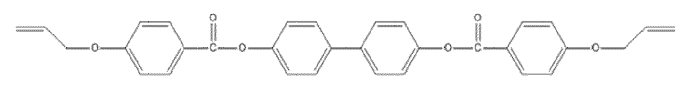

Step 1, in a nitrogen atmosphere, 1 mol of 4-allyloxy-benzoic acid and 1 mol of thionyl chloride are placed in a three-neck flask filled with toluene, and refluxed at 60 °C for 5 hours until the solution is clear. After the reaction, the excess toluene and thionyl chloride are removed by distillation under reduced pressure, to obtain the yellowish liquid 4-allyloxy benzoyl chloride.

Step 2, 2 mol of 4-allyloxy benzoyl chloride and 1 mol of 4,4'-dihydroxybiphenyl are separately diluted with tetrahydrofuran. Then triethylamine is added into the diluent of 4,4'-dihydroxybiphenyl, and the diluent of 4-allyloxy benzoyl chloride is dropped therein slowly. After reflux at 60 °C for 24 hours, the suspension is filtered while hot. The filtrate is retained, and cooled to precipitate white crystals. Then the white crystals are recrystallized with tetrahydrofuran to obtain the 4,4'-bis(allyl-benzoic acid) biphenyl ester-based allyl compound.

### Example 1

Step 1, 80 parts by mass of 4,4'-bis(4-allyl-benzoic acid) biphenyl ester obtained in the above synthesis example was heated to molten state, and then 100 parts by mass of a bismaleimide resin was added to react and prepolymerize at 150 °C for 60 min. After cooling down to room temperature, a modified bismaleimide prepolymer A was obtained.

Step 2, 20 parts by mass of the above modified bismaleimide prepolymer A and 10 parts by mass of a bisphenol A cyanate ester resin were successively dissolved in a mixed solvent. The mixed solvent included butanone, toluene and propylene glycol methyl ether at a mass ratio of 1:1:1. Then 5 parts by mass of 2-methylimidazole was added under stirring condition, and continued to be stirred to obtain a homogeneous adhesive solution, i.e., a modified bismaleimide prepolymer resin composition.

Step 3, 2116 glass fiber cloth with a mass of 105 g/m² was immersed in the modified bismaleimide prepolymer resin composition, and dried in a hot air circulating oven at 180 °C for 3 min, to obtain a prepreg with a resin content of 45 %.

Step 4, six prepregs were stacked, and the upper and lower sides of the prepreg stack were each clad with an electrolytic copper foil having a thickness of 12 µm. Then the stack was placed in a vacuum compressor with programmable temperature and pressure control. Under the vacuum condition, a copper-clad laminate with a thickness of 0.6 mm was obtained after curing at 180 °C for 1 hour, 200 °C for 2 hours, and 240 °C for 2 hours under a pressure of 20 kgf/cm².

### Example 2

Step 1, 80 parts by mass of 4,4'-bis(4-allyl-benzoic acid) biphenyl ester obtained in the above synthesis example was heated to molten state, and then 100 parts by mass of a bismaleimide resin was added to react and prepolymerize at 150 °C for 60 min. After cooling down to room temperature, a modified bismaleimide prepolymer A was obtained.

Step 2, 80 parts by mass of the above modified bismaleimide prepolymer A and 60 parts by mass of a bisphenol A cyanate ester resin were successively dissolved in a mixed solvent. The mixed solvent included butanone, toluene and propylene glycol methyl ether at a mass ratio of 1:1:1. Then 50 parts by mass of spherical silicon dioxide and 10 parts by mass of 2-methylimidazole were added under stirring condition, and continued to be stirred to obtain a homogeneous adhesive solution, i.e., a modified bismaleimide prepolymer resin composition.

Step 3, 2116 glass fiber cloth with a mass of 105 g/m² was immersed in the modified bismaleimide prepolymer resin composition, and dried in a hot air circulating oven at 180 °C for 3 min, to obtain a prepreg with a resin content of 55 %.

Step 4, six prepregs were stacked, and the upper and lower sides of the prepreg stack were each clad with an electrolytic copper foil having a thickness of 12 µm. Then the stack was placed in a vacuum compressor with programmable temperature and pressure control. Under the vacuum condition, a copper-clad laminate with a thickness of 0.6 mm was obtained after curing at 180 °C for 1 hour, 200 °C for 2 hours and 240 °C for 2 hours under a pressure of 20 kgf/cm².

### Example 3

Step 1, 80 parts by mass of 4,4'-bis(4-allyl-benzoic acid) biphenyl ester obtained in the above synthesis example was heated to molten state, and then 100 parts by mass of a bismaleimide resin was added to react and prepolymerize at 150 °C for 60 min. After cooling down to room temperature, a modified bismaleimide prepolymer A was obtained.

Step 2, 50 parts by mass of the above modified bismaleimide prepolymer A and 35 parts by mass of a bisphenol A cyanate ester resin were successively dissolved in a mixed solvent.. The mixed solvent included butanone, toluene and propylene glycol methyl ether at a mass ratio of 1:1:1. Then 25 parts by mass of spherical silicon dioxide and 8 parts by mass of 2-methylimidazole were added under stirring condition, and continued to be stirred, to obtain a homogeneous adhesive solution, i.e., a modified bismaleimide prepolymer resin composition.

Step 3, 2116 glass fiber cloth with a basis mass of 105 g/m² was immersed in the modified bismaleimide prepolymer resin composition, and dried in a hot air circulating oven at 180 °C for 3 min, to obtain a prepreg with a resin content of 50 %.

Step 4, six prepregs were stacked, and the upper and lower sides of the prepreg stack were each clad with an electrolytic copper foil having a thickness of 12 µm. Then the stack was placed in a vacuum compressor with programmable temperature and pressure control. Under the vacuum condition, a copper-clad laminate with a thickness of 0.6 mm was obtained after curing at 180 °C for 1 hour, 200 °C for 2 hours and 240 °C for 2 hours under a pressure of 20 kgf/cm².

### Example 4

Step 1, 80 parts by mass of 4,4'-bis(4-allyl-benzoic acid) biphenyl ester obtained in the above synthesis example was heated to molten state, and then 100 parts by mass of a bismaleimide resin was added to react and prepolymerize at 150 °C for 60 min. After cooling down to room temperature, a modified bismaleimide prepolymer A was obtained.

Step 2, 90 parts by mass of the above modified bismaleimide prepolymer A and 70 parts by mass of a bisphenol A cyanate ester resin were successively dissolved in a mixed solvent. The mixed solvent included butanone, toluene and propylene glycol methyl ether at a mass ratio of 1:1:1. Then 50 parts by mass of spherical silicon dioxide and 10 parts by mass of 2-methylimidazole were added under stirring condition, and continued to be stirred, to obtain a homogeneous adhesive solution, i.e., a modified bismaleimide prepolymer resin composition.

Step 3, 2116 glass fiber cloth with a mass of 105 g/m² was immersed in the modified bismaleimide prepolymer resin composition, and dried in a hot air circulating oven at 180 °C for 3 min, to obtain a prepreg with a resin content of 55 %.

Step 4, six prepregs were stacked, and the upper and lower sides of the prepreg stack were each clad with an electrolytic copper foil having a thickness of 12 µm. Then the stack was placed in a vacuum compressor with programmable temperature and pressure control. Under the vacuum condition, a copper-clad laminate with a thickness of 0.6 mm was obtained after curing at 180 °C for 1 hour, 200 °C for 2 hours and 240 °C for 2 hours under a pressure of 20 kgf/cm².

### Example 5

Step 1, 50 parts by mass of 4,4'-bis(4-allyl-benzoic acid) biphenyl ester obtained in the above synthesis example and 30 parts by mass of diallyl bisphenol A were heated to molten state, and then 100 parts by mass of a bismaleimide resin was added to react and prepolymerize at 150 °C for 60 min. After cooling down to room temperature, a modified bismaleimide prepolymer B was obtained.

Step 2, 80 parts by mass of the above modified bismaleimide prepolymer B and 60 parts by mass of a bisphenol A cyanate ester resin were successively dissolved in a mixed solvent. The mixed solvent included butanone, toluene and propylene glycol methyl ether at a mass ratio of 1:1:1. Then 50 parts by mass of spherical silicon dioxide and 10 parts by mass of 2-methylimidazole were added under stirring condition, and continued to be stirred, to obtain a homogeneous adhesive solution, i.e., a modified bismaleimide prepolymer resin composition.

Step 3, 2116 glass fiber cloth with a mass of 105 g/m² was immersed in the modified bismaleimide prepolymer resin composition, and dried in a hot air circulating oven at 180 °C for 3 min, to obtain a prepreg with a resin content of 55 %.

Step 4, six prepregs were stacked, and the upper and lower sides of the prepreg stack were each clad with an electrolytic copper foil having a thickness of 12 µm. Then the stack was placed in a vacuum compressor with programmable temperature and pressure control. Under the vacuum condition, a copper-clad laminate with a thickness of 0.6 mm was obtained after curing at 180 °C for 1 hour, 200 °C for 2 hours and 240 °C for 2 hours under a pressure of 20 kgf/cm².

### Comparative Example 1

Step 1, 80 parts by mass of 2,2'-diallyl bisphenol A was heated to molten state, and then 100 parts by mass of a bismaleimide resin was added to react and prepolymerize at 150 °C for 60 min. After cooling down to room temperature, a modified bismaleimide prepolymer C was obtained.

Step 2, 20 parts by mass of the above modified bismaleimide prepolymer C and 10 parts by mass of a bisphenol A cyanate ester resin were successively dissolved in a mixed solvent. The mixed solvent included butanone, toluene and propylene glycol methyl ether at a mass ratio of 1:1:1. Then 5 parts by mass of 2-methylimidazole was added under stirring condition, and continued to be stirred, to obtain a homogeneous adhesive solution, i.e., a modified bismaleimide prepolymer resin composition.

Step 3, 2116 glass fiber cloth with a mass of 105 g/m² was immersed in the modified bismaleimide prepolymer resin composition, and dried in a hot air circulating oven at 180 °C for 3 min, to obtain a prepreg with a resin content of 45 %.

Step 4, six prepregs were stacked, and the upper and lower sides of the prepreg stack were each clad with an electrolytic copper foil having a thickness of 12 µm. Then the stack was placed in a vacuum compressor with programmable temperature and pressure control. Under the vacuum condition, a copper-clad laminate with a thickness of 0.6 mm was obtained after curing at 180 °C for 1 hour, 200 °C for 2 hours and 240 °C for 2 hours under a pressure of 20 kgf/cm².

### Comparative Example 2

Step 1, 20 parts by mass of a bismaleimide resin and 10 parts by mass of a bisphenol A cyanate ester resin were successively dissolved in a mixed solvent. The mixed solvent included butanone, toluene and propylene glycol methyl ether at a mass ratio of 1:1:1. Then 5 parts by mass of 2-methylimidazole was added under stirring condition, and continued to be stirred, to obtain a homogeneous adhesive solution, i.e., a bismaleimide resin composition.

Step 2, 2116 glass fiber cloth with a basis mass of 105 g/m² was immersed in the bismaleimide resin composition, and dried in a hot air circulating oven at 180 °C for 3 min, to obtain a prepreg with a resin content of 45 %.

Step 3, six prepregs were stacked, and the upper and lower sides of the prepreg stack were each clad with an electrolytic copper foil having a thickness of 12 µm. Then the stack was placed in a vacuum compressor with programmable temperature and pressure control. Under the vacuum condition, a copper-clad laminate with a thickness of 0.6 mm was obtained after curing at 180 °C for 1 hour, 200 °C for 2 hours and 240 °C for 2 hours under a pressure of 20 kgf/cm².

The above raw materials used in the Examples and Comparative Examples are all commercially available. The bismaleimide resin can be purchased from Honghu Shuangma Resin Co., with product model of BMI-01. The bisphenol A cyanate ester resin can be purchased from Techia New Material Co., Ltd, with product model of C01MO. Spherical silicon dioxide can be purchased from Admatechs Co., Ltd, with product model of SO-C2. 2-methylimidazole can be purchased from SHIKOKU Co., Ltd.

The formulations and preparation parameters of the modified bismaleimide prepolymers in the above Examples and Comparative Examples are summarized as follows.

**Table 1**

| | Bismaleimide resin | Modifier | Reaction and Prepolymerization |
|---|---|---|---|
| Example 1 | 100 parts by mass, N,N'-(4,4'-methylene-diphenyl) bismaleimide | 80 parts by mass, 4,4'-bis(4-allyl-benzoic acid) biphenyl ester | 150 °C, 60 min |
| Example 2 | 100 parts by mass, N,N'-(4,4'-methylene-diphenyl) bismaleimide | 80 parts by mass, 4,4'-bis(4-allyl-benzoic acid) biphenyl ester | 150 °C, 60 min |
| Example 3 | 100 parts by mass, | 80 parts by mass, 4,4'-bis(4-allyl-benzoic acid) | 150 °C, 60 min |
| | N,N'-(4,4'-methylene-diphenyl) bismaleimide | biphenyl ester | |
| Example 4 | 100 parts by mass, N,N'-(4,4'-methylene-diphenyl) bismaleimide | 80 parts by mass, 4,4'-bis(4-allyl-benzoic acid) biphenyl ester | 150 °C, 60 min |
| Example 5 | 100 parts by mass, N,N'-(4,4'-methylene-diphenyl) bismaleimide | 80 parts by mass, 4,4'-bis(4-allyl-benzoic acid) biphenyl ester; 30 parts by mass, diallyl bisphenol A | 150 °C, 60 min |
| Comparative Example 1 | 100 parts by mass, N,N'-(4,4'-methylene-diphenyl) bismaleimide | 80 parts by mass, diallyl bisphenol A | 150 °C, 60 min |
| Comparative Example 2 | N,N'-(4,4'-methylene-diphenyl) bismaleimide | / | / |

The formulations of the resin compositions in the above Examples and Comparative Examples are summarized as follows.

**Table 2 (parts by mass)**

| Component | Example 1 | Example 2 | Example 3 | Example 4 | Example 5 | Comparative Example 1 | Comparative Example 1 |
|---|---|---|---|---|---|---|---|
| Bismaleimide prepolymer A | 20 | 80 | 50 | 90 | 0 | 0 | 0 |
| Bismaleimide prepolymer B | 0 | 0 | 0 | 0 | 80 | 0 | 0 |
| Bismaleimide prepolymer C | 0 | 0 | 0 | 0 | 0 | 20 | 0 |
| Bismaleimide resin | 0 | 0 | 0 | 0 | 0 | 0 | 20 |
| Bisphenol A cyanate ester resin | 10 | 60 | 35 | 70 | 60 | 10 | 10 |
| Spherical silicon dioxide | 0 | 50 | 25 | 50 | 50 | 0 | 0 |
| 2-methylimidazole | 5 | 10 | 8 | 10 | 10 | 5 | 5 |
| Solvent | 20 | 50 | 30 | 40 | 40 | 20 | 20 |

Performances of the copper-clad laminates prepared in Examples 1 to 5 and Comparative Examples 1 to 2 were tested, and the results are shown as follows.

**Table 3**

| Test results | Unit | Example 1 | Example 2 | Example 3 | Example 4 | Example 5 | Comparative Example 1 | Comparative Example 1 |
|---|---|---|---|---|---|---|---|---|
| Resin compatibility | NA | Ok | Ok | Ok | Ok | Ok | Ok | slightly precipitation |
| Peeling strength | lb/in | 7.1 | 6.6 | 6.8 | 6.2 | 6.4 | 3.1 | 3.0 |
| Toughness by falling weight impact | NA | ☆☆☆☆ ☆ | ☆☆☆☆ | ☆☆☆☆ | ☆☆☆ | ☆☆☆ | ☆☆ | ☆ |
| Heat resistance to tin immersion | min | >10 | >10 | >10 | >10 | >10 | >10 | >10 |
| Tg | °C | 290 | 285 | 280 | 282 | 275 | 270 | 260 |
| Td | °C | 400 | 390 | 388 | 390 | 380 | 360 | 350 |

| | | | | | | | | |
|---|---|---|---|---|---|---|---|---|
| Note: ☆ shows toughness of a laminate, the more the better. | | | | | | | | |

The test methods were as follows.
1) The peel strength was determined according to IPC-TM-650 2.4.8.
2) The glass-transition temperature (Tg) was determined according to IPC-TM650 2.4.25D.
3) The thermal decomposition temperature (Td) was determined according to IPC-TM650 2.4.24.6.
4) The heat resistance to tin immersion was determined according to IPC-TM650 2.4.13.1.
5) The resin compatibility was visually inspected by directly observing whether the resin was precipitated.
6) The toughness by falling weight impact was determined according to GBT14153-1993.

### Example 6

Step 1, 50 parts by mass of 3,3',5,5'-tetramethyl-4,4'-bis(4-allyl-benzoic acid) biphenyl ester was heated to molten state, and then 100 parts by mass of a bismaleimide resin was added to react and prepolymerize at 120 °C for 30 min. After cooling down to room temperature, a modified bismaleimide prepolymer D was obtained.

Step 2, 20 parts by mass of the above modified bismaleimide prepolymer D and 10 parts by mass of a bisphenol F cyanate ester resin were successively dissolved in 20 parts by mass of a mixed solvent. The mixed solvent included butanone, toluene and propylene glycol methyl ether at a mass ratio of 1:1:1. Then 10 parts by mass of kaolin and 5 parts by mass of a tertiary amine accelerator (i.e., tris(dimethylaminomethyl)phenol) were added under stirring condition, and continued to be stirred, to obtain a homogeneous adhesive solution, i.e., a modified bismaleimide prepolymer resin composition.

Step 3, asbestos fibers were immersed in the modified bismaleimide prepolymer resin composition, and dried in a hot air circulating oven at 130 °C for 2 min, to obtain a prepreg with a resin content of 45 %.

Step 4, six prepregs were stacked, and the upper and lower sides of the prepreg stack were each clad with an electrolytic copper foil having a thickness of 3 µm. Then the stack was placed in a vacuum compressor with programmable temperature and pressure control. Under the vacuum condition (<2kPa), a copper-clad laminate was obtained after curing at 150 °C for 200 min under a pressure of 10 kgf/cm².

### Example 7

Step 1, 100 parts by mass of 2,2',3,3',5,5'-hexamethyl-4,4'-bis(4-allyl-benzoic acid) biphenyl ester was heated to molten state, and then 100 parts by mass of a bismaleimide resin was added to react and prepolymerize at 180 °C for 120 min. After cooling down to room temperature, a modified bismaleimide prepolymer E was obtained.

Step 2, 20 parts by mass of the above modified bismaleimide prepolymer E and 10 parts by mass of a bisphenol M cyanate ester resin were successively dissolved in 20 parts by mass of a mixed solvent. The mixed solvent included butanone, toluene and propylene glycol methyl ether at a mass ratio of 1:1:1. Then 30 parts by mass of molybdenum oxide and 5 parts by mass of an organophosphorus accelerator (i.e., triphenylphosphine) were added under stirring condition, and continued to be stirred, to obtain a homogeneous adhesive solution, i.e., a modified bismaleimide prepolymer resin composition.

Step 3, carbon fibers were immersed in the modified bismaleimide prepolymer resin composition, and dried in a hot air circulating oven at 250 °C for 10 min, to obtain a prepreg with a resin content of 45 %.

Step 4, six prepregs were stacked, and the upper and lower sides of the prepreg stack were each clad with an electrolytic copper foil having a thickness of 70 µm. Then the stack was placed in a vacuum compressor with programmable temperature and pressure control. Under the vacuum condition, a copper-clad laminate was obtained after curing at 300 °C for 400 min under a pressure of 20 kgf/cm².

### Example 8

This example is similar to Example 1, except that the raw materials of the resin composition further include 10 parts by mass of a benzoxazine resin.

**Table 4**

| Test results | Unit | Example 6 | Example 7 | Example 8 |
|---|---|---|---|---|
| Resin compatibility | NA | ok | ok | ok |
| Peeling strength | lb/in | 6.7 | 150 | 6.3 |
| Toughness by falling weight impact | NA | ☆☆☆☆ | ☆☆☆☆ | ☆☆☆ |
| Heat resistance to tin immersion | min | >10 | >10 | >10 |
| Tg | °C | 281 | 284 | 279 |
| Td | °C | 384 | 386 | 374 |

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those skilled in the art that various modifications and improvements can be made without departing from the concept of the present disclosure, and all fall within the protection scope of the present disclosure. Therefore, the patent protection of the present disclosure shall be defined by the appended claims.

## Claims

1. A modified bismaleimide prepolymer, prepared from raw materials comprising a bismaleimide resin and a modifier; and the modifier is a 4,4'-bis(allyl-benzoic acid) biphenyl ester-based allyl compound, or a combination of the 4,4'-bis(allyl-benzoic acid) biphenyl ester-based allyl compound and another type of bismaleimide resin modifier.

2. The modified bismaleimide prepolymer of claim 1, wherein the raw materials comprise 100 parts by mass of the bismaleimide resin corresponding to 50 to 100 parts by mass of the 4,4'-bis(allyl-benzoic acid) biphenyl ester-based allyl compound.

3. The modified bismaleimide prepolymer of claim 1 or 2, wherein the 4,4'-bis(allyl-benzoic acid) biphenyl ester-based allyl compound is selected from the group consisting of 4,4'-bis(4-allyl-benzoic acid) biphenyl ester, 3,3',5,5'-tetramethyl-4,4'-bis(4-allyl-benzoic acid) biphenyl ester, 2,2',6,6'-tetra-tert-butyl-4,4'-bis(4-allyl-benzoic acid) biphenyl ester, 3,3',5,5'-tetra-tert-butyl-2,2'-bis(4-allyl-benzoic acid) biphenyl ester, 3,3',5,5'-tetramethoxyl-4,4'-bis(4-allyl-benzoic acid) biphenyl ester, 3,3',5,5'-tetrachloro-4,4'-bis(4-allyl-benzoic acid) biphenyl ester, 2,2',3,3',5,5'-hexamethyl-4,4'-bis(4-allyl-benzoic acid) biphenyl ester, and any combinations thereof.

4. The modified bismaleimide prepolymer of claim 1 or 2, wherein the bismaleimide resin is an organic compound containing two or more maleimide groups in a molecular structure thereof.

5. The modified bismaleimide prepolymer of claim 4, wherein the bismaleimide resin is selected from the group consisting of N,N'-(4,4'-methylene-diphenyl) bismaleimide, N-phenyl maleimide, N-(2-methylphenyl) maleimide, N-(4-methylphenyl) maleimide, N-(2,6-dimethylphenyl) maleimide, bis(4-maleimidophenyl) methane, 2,2-bis(4-(4-maleimido phenoxy)-phenyl) propane, bis-(3,5-dimethyl-4-maleimidophenyl) methane, bis-(3-ethyl-5-methyl-4-maleimidophenyl) methane, bis-(3,5-diethyl-4-maleimidophenyl)methane, polyphenyl-methane bismaleimide, biphenyl structure containing maleimide, and any combinations thereof.

6. The modified bismaleimide prepolymer of any one of claims 1, 2 and 5, wherein the other type of bismaleimide resin modifier is selected from the group consisting of diallyl bisphenol A, diallyl bisphenol S, diallyl bisphenol F, bisphenol A diallyl ether, and any combinations thereof.

7. A method for preparing the modified bismaleimide prepolymer of any one of claims 1 to 6, comprising a step of:
adding the bismaleimide resin into a melted 4,4'-bis(allyl-benzoic acid) biphenyl ester-based allyl compound to react for prepolymerization.

8. The method of claim 7, wherein a reaction temperature is 120 °C to 180 °C, and a reaction time is 30 min to 120 min.

9. A resin composition comprising a modified bismaleimide prepolymer, a cyanate ester resin, an inorganic filler, and a curing accelerator, wherein the modified bismaleimide prepolymer is the modified bismaleimide prepolymer of any one of claims 1 to 6.

10. The resin composition of claim 9, wherein the resin composition comprises:
10 to 100 parts by mass of the modified bismaleimide prepolymer,
10 to 90 parts by mass of the cyanate ester resin,
0 to 50 parts by mass of the inorganic filler, and
5 to 10 parts by mass of the curing accelerator.

11. The resin composition of claim 9 or 10, wherein the resin composition comprises:
20 to 80 parts by mass of the modified bismaleimide prepolymer,
10 to 90 parts by mass of the cyanate ester resin,
0 to 50 parts by mass of the inorganic filler, and
5 to 10 parts by mass of the curing accelerator.

12. The resin composition of claim 9 or 10, wherein the resin composition comprises:
10 to 100 parts by mass of the modified bismaleimide prepolymer,
10 to 60 parts by mass of the cyanate ester resin,
0 to 50 parts by mass of the inorganic filler, and
5 to 10 parts by mass of the curing accelerator.

13. The resin composition of claim 9 or 10, wherein the cyanate ester resin is selected from the group consisting of a bisphenol A cyanate ester resin, a phenolic formaldehyde cyanate ester resin, a bisphenol F cyanate ester resin, a multfunctional group cyanate ester resin, a bisphenol M cyanate ester resin, a bisphenol E cyanate ester resin, a dicyclopentadiene bisphenol cyanate ester resin, and any combinations thereof.

14. The resin composition of claim 9 or 10, wherein the inorganic filler is selected from the group consisting of zirconium vanadate, zirconium tungstate, hafnium tungstate, microcrystalline glass, eucryptite, silicon dioxide, quartz, mica powder, titanium dioxide, magnesium oxide, magnesium hydroxide, talc powder, aluminum oxide, silicon carbide, boron nitride, aluminum nitride, molybdenum oxide, barium sulfate, zinc molybdate, zinc borate, zinc stannate, zinc oxide, strontium titanate, barium titanate, calcium titanate, clay, kaolin, and any combinations thereof.

15. The resin composition of claim 9 or 10, wherein the curing accelerator is selected from the group consisting of a tertiary amine accelerator, an imidazole accelerator, a peroxide accelerator, an organophosphorus accelerator, a transition metal carboxylate accelerator, and any combinations thereof.

16. The resin composition of claim 9 or 10, wherein the resin composition further comprises another type of resin, and the other type of resin is selected from the group consisting of an epoxy resin, a benzoxazine resin, polyphenyl ether, a hydrocarbon resin, and any combinations thereof.

17. A method for preparing the resin composition of any one of claims 9 to 15, comprising a step of:
mixing the modified bismaleimide prepolymer, the cyanate ester resin, the inorganic filler, the curing accelerator, and a solvent together.

18. The method of claim 17, wherein the solvent is selected from the group consisting of ethanol, acetone, cyclohexanone, butanone, toluene, xylene, N,N-dimethylformamide, propylene glycol methyl ether, and any combinations thereof; or/and the solvent takes 10 to 50 parts by mass.

19. A prepreg comprising a reinforcement material and a resin material, wherein resin material is prepared from raw materials comprising the modified bismaleimide prepolymer of any one of claims 1 to 6, or the resin material is the resin composition of any one of claims 9 to 16.

20. The prepreg of claim 19, wherein the reinforcement material is an inorganic fiber material or/and an organic fiber material.

21. The prepreg of claim 20, wherein the inorganic fiber material is selected from the group consisting of glass fibers, carbon fibers, silicon carbide fibers, asbestos fibers, and any combinations thereof; or/and the organic fiber material is selected from the group consisting of nylon, ultra-high molecular mass polyethylene fibers, aramid fibers, polyimide fibers, polyester fibers, cotton fibers, and any combinations thereof.

22. A method for preparing the prepreg of any one of claims 19 to 21, comprising a step of:
immersing the reinforcement material in the resin material, and heating.

23. The method of claim 22, wherein the heating is at 130 °C to 250 °C, and is kept for 2 min to 10 min.

24. A laminate comprising a prepreg, wherein the prepreg is prepared from raw materials comprising the modified bismaleimide prepolymer of any one of claims 1 to 6, or the resin composition of any one of claims 9 to 16, or the prepreg is the prepreg of any one of claims 19 to 21.

25. The laminate of claim 24, wherein the laminate is clad with metal foil at one side or both sides of the laminate.

26. The laminate of claim 25, wherein the metal foil is copper foil; or/and the thickness of the metal foil is 3 µm to 70 µm.

27. A method for preparing the laminate of claim 24, comprising a step of: hot pressing the prepreg under vacuum.

28. The method of claim 27, wherein conditions for hot pressing under vacuum comprise: a temperature of 150 °C to 300 °C, a pressure of 10 kgf/cm² to 30 kgf/cm², a vacuum degree of < 2 kPa, and hot pressing time of 200 min to 400 min.
